# FASCICULE DE BREVET EUROPEEN

(11) **EP 2 053 805 B1**
(45) Date de publication et mention de la délivrance du brevet: **05.09.2012**
(21) Numéro de dépôt: 08290999.5
(22) Date de dépôt: 23.10.2008
(51) Int. Cl.: H04L 12/58, H04L 29/08, H04W 4/06

(54) **Procédé et système de messagerie instantanée pour terminaux mobiles équipé d'un serveur de présence virtuelle permettant de gérer automatiquement une session de messagerie instantanée**
Instant-Messaging-Verfahren und -System für mobile Endgeräte, die mit einem virtuellen Anwesenheitsserver ausgestattet sind, der eine automatische Verwaltung einer Instant-Messaging-Session ermöglicht
Instant messaging method and system for mobile terminals equipped with a virtual presence server capable of automatically managing an instant messaging session

(30) Priorité: 24.10.2007 FR 0707482; 01.02.2008 US 024153
(43) Date de publication de la demande: 29.04.2009
(73) Titulaire: Miyowa, F-13002 Marseille (FR)
(72) Inventeur: Colon, Froncois, 13013 Marseille (FR)
(74) Mandataire: Novagraaf Technologies

(56) Documents cités:
- WO-A-2004/031976
- US-A1- 2002 165 000
- US-A1- 2006 014 530
- US-A1- 2007 203 986
- US-B1- 7 188 140
- NE D ET AL: "Instant messaging &presence management in mobile ad-hoc networks" ASIVE COMPUTING AND COMMUNICATIONS WORKSHOPS, 2004. PROCEEDINGS OF THE SECOND IEEE ANNUAL CONFERENCE ON, PISCATAWAY, NJ, USA,IEEE, 14 mars 2004 (2004-03-14), pages 55-59, XP010688889 ISBN: 978-0-7695-2106-0

## Description

### Domaine technique de l'invention.

La présente invention a pour objet un système de messagerie instantanée pour terminaux mobiles équipé d'un serveur de présence virtuelle permettant de gérer automatiquement une session de messagerie instantanée. L'invention a également pour objet un procédé permettant de gérer automatiquement une session de messagerie instantanée dans un tel système.

L'invention concerne le domaine technique des messageries instantanées sur terminaux mobiles et plus particulièrement le domaine du routage des communications dans un système de messagerie instantanée.

### État de la technique.

Lorsqu'un utilisateur souhaite ouvrir une session de messagerie instantanée, une application informatique placée dans son terminal mobile émet une requête de présence à destination du serveur de messagerie. Cette requête de présence contient généralement des données permettant d'identifier l'utilisateur. Une fois que l'utilisateur est identifié par le serveur de messagerie, ce dernier envoi aux autres utilisateurs ayant ouvert une session, une information indiquant la présence dudit utilisateur et son souhait de converser. L'application informatique émet périodiquement vers le serveur de messagerie instantanée les requêtes de présence selon une certaine fréquence.
Lorsque l'utilisateur clôt sa session de messagerie, l'application informatique émet une requête de déconnexion à destination du serveur de messagerie instantanée. Cette requête de déconnexion indique au serveur de messagerie que l'utilisateur souhaite clore sa session et ne souhaite plus converser avec les autres utilisateurs. Le serveur de messagerie informe alors les autres utilisateurs de cet évènement.
Il peut arriver qu'un utilisateur de terminal mobile ne puisse pas, ou ne souhaite pas, maintenir sa session de messagerie instantanée ouverte en permanence. Ce peut être le cas lorsque l'utilisateur est en réunion, au volant de sa voiture, etc. Dans de telles situations et avec les systèmes connus de l'art antérieur, soit l'utilisateur clos sa session, soit il la maintient ouverte mais sans converser.
Dans le cas où l'utilisateur clôt sa session, les autres utilisateurs seront informés de cette clôture et ils arrêteront de converser avec lui. Ceci peut être préjudiciable pour l'utilisateur, car il ne reçoit plus aucune information tant qu'il n'ouvre pas de nouveau une session. Dans le cas où l'utilisateur conserve sa session ouverte, il ne pourra plus converser avec les autres utilisateurs. Pour ces derniers, il peut être déplaisant de ne pas voir son correspondant répondre immédiatement, d'autant plus que la messagerie instantanée est perçue comme un moyen d'être joignable en temps réel. Cet état des choses représente un premier inconvénient figurant dans les systèmes de messagerie de l'art antérieur.

Dans les systèmes de messagerie instantanée classiques, des serveurs de messagerie instantanée sont aptes à délivrer des services de messagerie instantanée à des terminaux connectés aux dits serveurs et dont les utilisateurs ont ouvert une session de messagerie instantanée.
Les serveurs de messagerie instantanée sont notamment configurés pour détecter un utilisateur connecté au service de messagerie instantanée et informer d'autres utilisateurs de sa présence afin qu'ils puissent converser. Ces serveurs de messagerie instantanée sont dotés de fonctionnalités limitées et généralistes.
D'autres services plus complexes comme la filtration de messages peuvent être délivrés par les serveurs de messagerie, mais ne sont pas forcément présents dans tous les serveurs de messagerie. Si ces services ne sont pas forcément présents, l'intégration de tels nouveaux services pour une utilisation dans un terminal mobile est longue et coûteuse pour les opérateurs, car un grand nombre de protocoles de gestion et de Softwares/Hardwares initialement prévus doivent être modifiés. Ceci est un second inconvénient qui se retrouve dans les systèmes de messagerie de l'art antérieur.

Le document US 2006/014530 décrit un serveur proxy auquel est connecté un dispositif mobile tel qu'un téléphone cellulaire. Ce serveur proxy est apte à fournir des services qu'à l'utilisateur du dispositif mobile et aux utilisateurs autorisés par cet utilisateur. Le serveur proxy relaie les messages entre le dispositif mobile et un serveur partage, et est apte à stocker, filtrer et à effectuer d'autres traitements sur les données personnelles de l'utilisateur, par exemple des messages transmis par le dispositif mobile et/ou le serveur partage.

Le document WO 2004/031976 décrit un système dans lequel un dispositif de traitement de données tel qu'un serveur proxy est configuré de sorte à supporter des sessions de messagerie instantanée au travers d'une pluralité de services de messagerie instantanée normalement incompatibles. Pour ce faire, il met en oeuvre un mécanisme permettant de recevoir des messages instantanés à partir du dispositif de traitement de données dans un premier format de messagerie instantanée. Par la suite un premier service, vers lequel sont dirigés les messages instantanés, est identifié et ces messages instantanés sont alors reformatés en un second format compatible avec ce premier service. Les messages instantanés dans ce second format sont alors transmis vers ce premier service.

Le document US 2002/165000 décrit un dispositif de communication sans fil apte à ouvrir une session sur un serveur de messagerie au travers d'un serveur de présence virtuelle. Le serveur virtuelle est connecté en permanence audit serveur de messagerie de sorte à transmettre, une notification d'un message instantané entrant au dispositif, en convertissant au moins une partie du message instantanée en un message au format SMS, ou en transmettant une alerte au format SMS qu'un message a été reçu, lorsque ce dispositif n'est pas connecté audit serveur de messagerie.

Le document US 2007/203986 décrit un procédé de messagerie instantanée entre plusieurs dispositifs sans fil reliés à une pluralité de stations de base. Dans ce procédé, un dispositif sans fil est capable de transmettre une alerte au serveur de messagerie de sorte à l'informer du fait qu'il soit apte à recevoir ou à ne plus recevoir de messages instantanés du fait qu'il soit ou ne soit plus sous couverture réseau. Ainsi un dispositif qui envoi un message à un autre dispositif localisé hors du champ de couverture d'un réseau recevra une alerte lui signifiant cet état de fait.

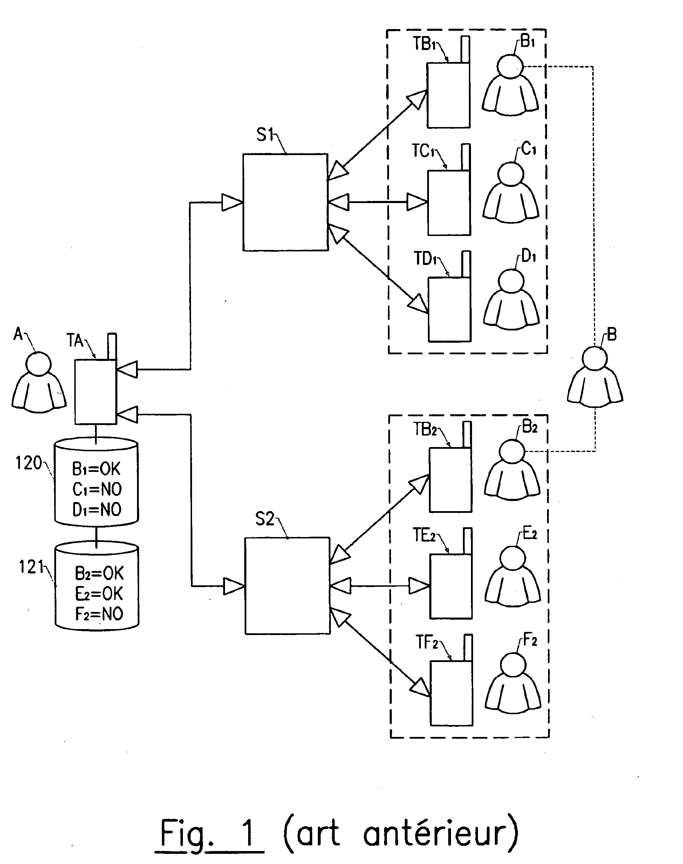

Un système de messagerie instantanée pour terminaux mobiles de l'art antérieur est représenté sur la figure 1. L'utilisateur A possède différentes listes de contacts, par exemple deux en l'occurrence : une première liste répertoriant trois contacts B1, C1, D1 appartenant à une première communauté Co1 de messagerie instantanée, par exemple YAHOO® ; une seconde liste répertoriant trois autres contacts B2, E2, F2 appartenant à une seconde communauté Co2, par exemple MSN®. Ces listes de contacts sont généralement envoyées par les serveurs de messagerie instantanée S1, S2, vers le terminal mobile TA de l'utilisateur A. Si l'utilisateur A souhaite converser avec les utilisateurs B1, C1 et D1, il doit se connecter au serveur de messagerie instantanée S1 associé à la première communauté Co1. Si l'utilisateur A souhaite par la suite converser avec les utilisateurs B2, C2 et D2 inscrits sur la seconde communauté Co2, par exemple MSN®, il doit se déconnecter du premier serveur S1 et se connecter au serveur de messagerie instantanée S2 associé à cette seconde communauté. On constate que ce procédé est laborieux et séquentiel. De plus, il n'y a pas de liaison entre les différentes listes de contacts. Par exemple, si un utilisateur B est inscrit sur plusieurs listes, il n'est pas possible de le voir une seule fois dans une seule liste.
Pour gérer de manière efficace une conversation par messagerie instantanée, il est plus simple de ne converser qu'avec une partie seulement de ses contacts et filtrer les messages provenant d'utilisateurs avec lesquels on ne souhaite pas converser. En effet, si tous les utilisateurs conversent en même temps, la conversation devient rapidement difficile à suivre, d'autant plus en utilisant un terminal mobile. Pour ce faire, l'utilisateur A peut définir des règles de filtration de manière à bloquer les messages à destination ou émis par les utilisateurs avec lesquels il ne souhaite pas converser.
Dans l'exemple représenté sur la figure 1, concernant la communauté Co1, l'utilisateur A souhaite uniquement converser avec l'utilisateur B1. Concernant la communauté Co2, l'utilisateur A souhaite converser avec les utilisateurs B2 et E2 et pas avec l'utilisateur F2. Pour ce faire, l'utilisateur A envois une requête au serveur S1 destinée à indiquer que :
- seuls les messages provenant des utilisateurs B1, B2 et E2 peuvent lui être communiqué et/ou les messages émis par l'utilisateur A ne doivent être destinés qu'aux utilisateurs B1, B2 et E2 (B1=OK ; B2=OK ; E2=OK) ;
- les messages provenant des utilisateurs C1, D1 et F2 doivent être bloqués et/ou les messages émis par l'utilisateur A ne doivent pas être transmis aux utilisateurs C1, D1 et F2 (C1=NO ; D1=NO ; F2=NO).

Les techniques de filtration sont connues de l'homme du métier. En principe, il s'agit de règles de filtration développées par les opérateurs de messagerie instantanée et intégrées dans leurs serveurs de messagerie instantanée existants. Actuellement, l'intégration de règles de filtration dans des serveurs de messagerie instantanée est longue et coûteuse pour les opérateurs, car un grand nombre de protocoles de gestion et de Softwares/Hardwares doivent être modifiés. Ceci reflète un troisième inconvénient présent dans les systèmes de messagerie de l'art antérieur.
Une autre possibilité envisageable par l'homme du métier, consiste à intégrer les règles de filtration dans le logiciel du terminal mobile qui permet de se connecter aux serveurs de messagerie. Toutefois, ces règles de filtration ne sont connues que par le logiciel du terminal mobile et l'utilisateur ne retrouvera pas ces règles s'il se connecte à partir d'un autre terminal mobile. De plus, cette solution alourdie le logiciel du terminal mobile puisqu'il faut stocker les données. Cela devient un handicap dans le cas de terminaux mobiles ayant peu ou pas de capacités de stockage et de traitement.

En se rapportant à l'exemple de la figure 1, un même utilisateur B peut appartenir à deux communautés différentes Co1 et Co2. Dans ce cas, il possédera deux identités différentes selon qu'il est connecté sur l'une ou l'autre des communautés, par exemple B@Co1.com et B@Co2.com.
Lorsque l'utilisateur B ouvre une session de messagerie instantanée sur la première communauté Co1, il est vu par le terminal mobile de l'utilisateur A comme un premier utilisateur B1 ayant comme identité, par exemple B@Co1.com. de même, lorsque l'utilisateur B ouvre une session de messagerie instantanée sur une seconde communauté Co2, il est vu par le terminal mobile de l'utilisateur A comme un second utilisateur B2 ayant comme identité, par exemple B@Co2.com.
Dans les systèmes de messagerie instantanée de l'art antérieur, dans le cas où l'utilisateur A souhaite établir une règle de filtration pour l'utilisateur B, deux règles identiques doivent être définies : une pour l'utilisateur B1 et une autre pour l'utilisateur B2. De manière regrettable, les dispositifs actuels ne permettent pas à l'utilisateur A de définir une seule règle de filtration concernant utilisateur B et d'appliquer cette seule règle aux utilisateurs B1 et B2. Ceci est encore un autre inconvénient qui apparaît dans les systèmes de messagerie de l'art antérieur.

Face à cet état des choses, le problème technique principal que vise à résoudre l'invention est de permettre à un utilisateur de poursuivre aisément une session de messagerie instantanée quand il ne peut pas, ou ne souhaite pas, maintenir sa session ouverte.
L'invention a également pour objectif de pouvoir ajouter de nouveaux services de messagerie instantanée dans un système de l'art antérieur, sans avoir à modifier les protocoles de gestion et/ou les Softwares/Hardwares initialement installés dans les serveurs de messagerie existants.
Un autre objectif de l'invention est de simplifier la connexion à diverses communautés de messagerie instantanée.
L'invention a encore pour objectif de simplifier la mise en oeuvre des règles de filtration dans un système de messagerie instantanée.

### Divulgation de l'invention.

La solution proposée par l'invention est un système de messagerie instantanée pour terminaux mobiles, comportant :
- un ou plusieurs serveurs de messagerie instantanée aptes à délivrer des services de messagerie instantanée à des terminaux mobiles connectés aux dits serveurs et dont les utilisateurs ont ouvert une session de messagerie instantanée,
- un serveur de présence virtuelle indépendant des serveurs de messagerie instantanée existants, ledit serveur de présence virtuelle étant connecté à au moins un terminal mobile client et à au moins un des serveurs de messagerie existants de manière à ce que les informations à destination ou émises par ledit terminal mobile client transitent par ledit serveur de présence virtuelle,
- et dans lequel ledit serveur de présence virtuelle comporte des moyens pour gérer automatiquement une session de messagerie instantanée à la place dudit utilisateur, lesdits moyens de gestion étant activés lorsque la connexion entre ledit terminal mobile client et ledit serveur de présence virtuelle est coupée.
La présence et l'activation aisée des moyens de gestion permettent à l'utilisateur du terminal mobile client de poursuivre automatiquement sa session quand il ne peut pas maintenir sa session ouverte.

Dans une variante de réalisation, le terminal mobile client intègre une application informatique permettant de transmettre audit serveur de présence virtuelle une requête indiquant que l'utilisateur dudit terminal clos sa session de messagerie instantanée, ladite requête contenant un code ou une partie de code apte, à l'exécution, à activer les moyens de gestion du serveur de présence virtuelle. Cette variante de réalisation permet d'activer aisément les moyens de gestion de manière à ce que le serveur de présence virtuelle poursuive automatiquement une session, lorsque l'utilisateur du terminal mobile client ne souhaite pas maintenir sa session ouverte.

Selon une autre caractéristique avantageuse de l'invention, une fois activés, les moyens de gestion sont configurés pour recevoir et stocker les messages émis par les autres utilisateurs encore en session et transmettre aux dits utilisateurs d'autres messages en réponse. L'utilisation du serveur de présence virtuelle permet donc de déporter la tenue d'une session de messagerie instantanée. L'utilisateur n'a plus besoin de maintenir une session ouverte en permanence, puisque le serveur de présence virtuelle s'en occupe pour lui. L'utilisateur va alors pouvoir choisir des actions qu'il souhaite que le serveur de présence virtuelle effectue vis à vis des autres utilisateurs encore en session.

Afin que les serveurs de messagerie instantanée ne détectent pas la fin de la session de l'utilisateur du terminal mobile client, une fois activés, les moyens de gestion maintiennent la connexion entre le serveur de présence virtuelle et lesdits serveurs de messagerie instantanée.

Une fois activés, les moyens de gestion peuvent avantageusement commander l'émission d'un message d'avertissement à destination des terminaux des autres utilisateurs encore en session. Cette caractéristique permet d'avertir les autres utilisateurs qu'un changement de statut relatif à l'utilisateur du terminal mobile client est intervenu.

Pour avertir l'utilisateur ayant clos sa session que d'autres utilisateurs cherchent à converser avec lui, une fois activés, les moyens de gestion peuvent être configurés pour commander l'émission d'un message d'alerte à destination du terminal mobile client, lorsqu'un message émis par les terminaux des utilisateurs encore en session et destiné à l'utilisateur dudit terminal mobile client, est reçu par le serveur de présence virtuelle.

Pour permettre à l'utilisateur du terminal mobile client de récupérer les messages qui sont échangés après la clôture de sa session, lors de la gestion automatique de la session, la réception, par le serveur de présence virtuelle, des messages émis par les terminaux des utilisateurs encore en session, commande les moyens de gestion de manière à ce que lesdits messages soient stockés dans une zone mémoire dudit serveur de présence virtuelle.

Pour simplifier la gestion de la session par le serveur de présence virtuelle, les listes de contacts envoyées par les serveurs de messagerie instantanée, sont interceptées par le serveur de présence virtuelle et renvoyées par ce dernier vers le terminal mobile client. Et préférentiellement, le serveur de présence virtuelle comporte un moyen pour agréger les différentes listes de contacts reçues, pour ne gérer qu'une unique liste sur laquelle sont inscrites les identités des différents utilisateurs, sans distinction de la communauté d'appartenance desdits utilisateurs. Cette agrégation est optionnelle, au choix de l'utilisateur.

Pour optimiser la gestion d'un utilisateur ayant plusieurs identités (i.e. inscrits sur plusieurs listes de contacts), le terminal mobile client comporte un moyen pour transmettre au serveur de présence virtuelle une information indiquant que des utilisateurs ayant des identités différentes doivent être traités comme un unique utilisateur, ledit serveur de présence virtuelle étant apte à se connecter au serveur de messagerie instantanée sur lequel le terminal mobile dudit utilisateur est connecté.

Selon encore une autre caractéristique avantageuse de l'invention permettant à l'utilisateur du terminal mobile client d'être averti de la présence d'un nouvel utilisateur lorsque le serveur de présence virtuelle gère automatiquement la session, les serveurs de messageries comportent un moyen pour transmettre audit serveur de présence virtuelle une requête de présence lorsqu'un nouvel utilisateur inscrit sur les listes de contacts ouvre une session de messagerie instantanée, le réception de cette requête commandant les moyens de gestion dudit serveur de présence virtuelle de manière à ce que lesdits moyens de gestion émettent un message d'avertissement à destination dudit terminal mobile client lors de la gestion automatique de la session de messagerie.

Selon encore une autre caractéristique avantageuse de l'invention permettant d'introduire des règles de filtration dans un système de messagerie instantanée de l'art antérieur, sans modifier l'architecture initiale des serveurs de présences existants, le serveur de présence virtuelle comporte une base de données contenant des règles de filtration destinées à être appliquées aux messages à destination ou émis par les terminaux des utilisateurs inscrits sur les listes de contacts transmises audit serveur. Pour ce faire, le terminal mobile client est équipée d'une application informatique permettant de transmettre au serveur de présence virtuelle des règles de filtration associées à différents utilisateurs, ledit serveur étant équipé de moyens pour enregistrer ces règles de filtration dans la base de données.

Et préférentiellement, le serveur de présence virtuelle comporte un moyen pour transmettre un message d'avertissement aux utilisateurs dont les messages ont été filtrés et/ou au terminal mobile client lorsqu'un message est filtré.

Dans le but de simplifier la gestion des règles de filtration, le serveur de présence virtuelle est équipé de moyens pour analyser les listes de contacts transmises par le terminal mobile client, et de moyens pour vérifier si pour chacun des utilisateurs inscrits sur lesdites listes, une ou plusieurs règles de filtration sont déjà enregistrées dans la base de données. Egalement, le serveur de présence virtuelle est avantageusement configuré pour appliquer la même règle de filtration aux messages à destination ou émis par les terminaux d'utilisateurs ayant des identités différentes, mais devant être traités comme un unique utilisateur.

La solution proposée par l'invention peut également être mise en oeuvre par une procédé pour gérer automatiquement une session dans un système de messagerie pour terminaux mobiles, dans lequel :
- des terminaux se connectent à au moins un serveur de messagerie instantanée de manière à ce que leurs utilisateurs puissent ouvrir une session de messagerie instantanée,
- au moins un terminal mobile client d'un utilisateur se connecte à un serveur de présence virtuelle, ce dernier comportant des moyens pour gérer automatiquement une session de messagerie instantanée à la place de l'utilisateur du terminal mobile client,
- le serveur de présence virtuelle se connecte à au moins un des serveurs de messagerie instantanée de manière à ce que l'utilisateur du terminal mobile client puisse ouvrir une session de messagerie instantanée et converser avec les autres utilisateurs, les informations à destination ou émises par ledit terminal mobile client transitant par ledit serveur de présence virtuelle,
- les moyens pour gérer automatiquement la session à la place de l'utilisateur du terminal mobile client sont activés lorsque la connexion entre le terminal mobile client et ledit serveur de présence virtuelle est coupée.

Dans une variante de réalisation :
- lorsque l'utilisateur du terminal mobile client souhaite clore sa session de messagerie instantanée, ledit terminal mobile client émet une requête en ce sens à destination du serveur de présence virtuelle,
- à la réception de cette requête, le serveur de présence virtuelle active les moyens pour gérer automatiquement la session à la place de l'utilisateur du terminal mobile client.

### Présentation des dessins.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 représente schématiquement un système de messagerie instantanée pour terminaux mobiles selon l'art antérieur,
- la figure 2 représente schématiquement un système de messagerie instantanée pour terminaux mobiles selon l'invention.

### Modes de réalisation de l'invention.

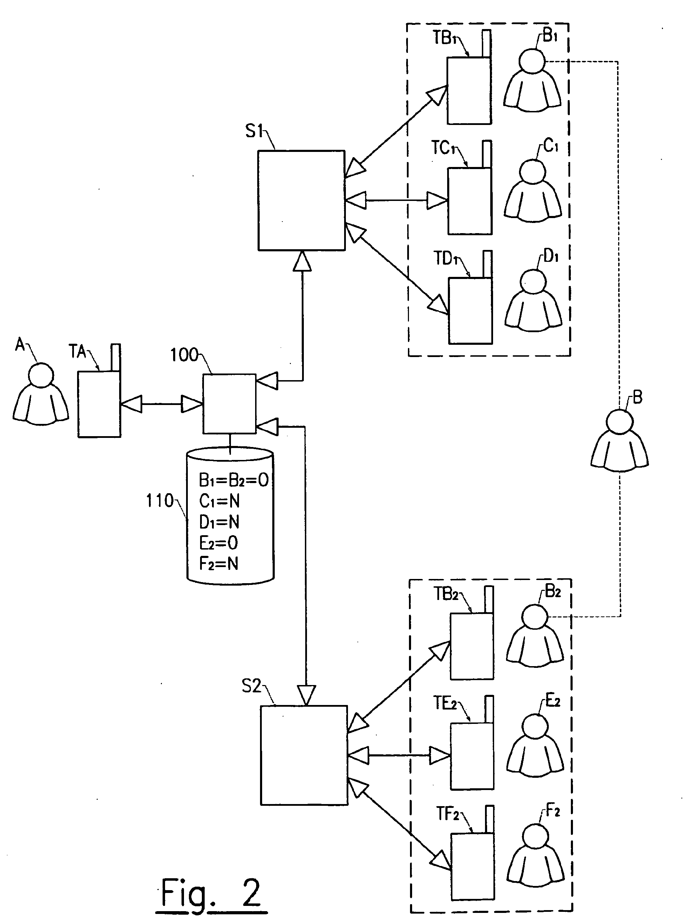

En se rapportant à la figure 2, le système de messagerie instantanée objet de l'invention comporte un ou plusieurs serveurs de messagerie instantanée S1, S2, du type connus de l'homme du métier et capables de délivrer des services de messageries instantanée basiques tels que transmission des messages, gestion des statuts de présence, etc.

Les serveurs S1, S2, sont associés à différentes communautés de messagerie instantanée. Ils sont connectés à un réseau de communication (MSM®, Jabber®, Yahoo !®, ...) habituellement employé pour mettre en oeuvre les services de messagerie instantanée. D'une manière bien connue, ces serveurs de messagerie sont équipés d'un processeur, contrôleur ou de tous autres moyens équivalents permettant de gérer l'état de présence des différents utilisateurs et plus généralement, les différents événements intervenant dans le système.
De la même manière que dans les systèmes de l'art antérieur, les serveurs S1, S2, sont aptes à délivrer des services de messagerie instantanée à des terminaux connectés aux dits serveurs et dont les utilisateurs ont ouvert une session de messagerie instantanée.

Les terminaux mobiles clients TA utilisés pour la mise en oeuvre de l'invention peuvent être des téléphones mobiles, des appareils du type assistant digital personnel (PDA), ou tout autre terminal mobile de communication apte à se connecter à un service de messagerie instantanée. Les terminaux mobiles sont configurés pour être connectés à un réseau de communication du type MSM®, Jabber®, Yahoo !®, etc. Ce type de terminal mobile est utilisé par l'utilisateur A dans la suite de la description.
Les autres terminaux TB1, TC1, TD1, TB2, TE2, TF2, utilisés sont aptes à se connecter au service de messagerie instantanée. Ils peuvent être mobiles du type téléphone mobile, assistant digital personnel (PDA) ou autre, mais également non mobiles tels que ordinateurs. Ce type de terminal est utilisé par les utilisateurs B1, C1, D1, B2, E2, F2 dans la suite de la description.

Les utilisateurs B1, C1, D1, B2, E2, F2, se connectent d'une manière classique aux serveurs de messagerie instantanée S1 et/ou S2 pour ouvrir une session de messagerie instantanée.

Conformément à l'invention, des moyens permettant de mettre en oeuvre des services de messagerie instantanée sont déportés dans un serveur de présence virtuelle 100 indépendant des serveurs de messagerie instantanée S1, S2 existants. En pratique, le serveur de présence virtuelle 100 est un ordinateur ou un programme informatique configuré pour proposer certains services de messagerie instantanée aux terminaux mobiles des clients qui s'y connectent.
Le serveur de présence virtuelle 100 est notamment équipé de moyens permettant de gérer automatiquement une session de messagerie instantanée à la place d'un utilisateur, de filtrer des messages et de gérer les listes de contacts d'un utilisateur. Toutefois, d'autres services tels que : prévision météo, publicités, jeux, messagerie audio, ou autres peuvent être mis en oeuvre.
L'utilisation du serveur de présence virtuelle 100 permet donc d'ajouter de nouvelles fonctionnalités dans un système de messagerie instantanée de l'art antérieur, sans avoir à modifier les serveurs de messagerie S1 et S2 existants.

En se rapportant à la figure 2, le serveur de présence virtuelle 100 est connecté à au moins un terminal mobile client TA et à au moins un des serveurs de messagerie existants S1, S2 de manière à ce que les informations à destination ou émises par ledit terminal mobile client transitent par ledit serveur de présence virtuelle durant la session.
En pratique, lorsque l'utilisateur A du terminal mobile client TA souhaite ouvrir une session de messagerie instantanée, une application informatique placée dans ledit terminal émet une requête de présence à destination du serveur de présence virtuelle 100. Cette requête de présence peut contenir l'identification de l'utilisateur et un mot de passe nécessaires pour que le serveur de présence virtuelle 100 autorise la connexion. Il s'agit d'une gestion classique d'autorisation d'accès. De manière avantageuse, la requête de présence contient une information unique permettant d'identifier de façon unique l'utilisateur A. Cet échange d'information est réalisé par l'intermédiaire d'un protocole de communication classique: connexion HTTP, SMS, TCP ou autre. De la même manière que dans les systèmes de l'art antérieur, tant que l'utilisateur A maintien personnellement ouverte sa session de messagerie instantanée, l'application informatique de son terminal mobile client TA continue d'émettre périodiquement des requêtes de présence selon une certaine fréquence ou se met en attente d'informations provenant du serveur de présence virtuelle 100.
Après analyse des informations d'identification de l'utilisateur A, le serveur de présence virtuelle 100 autorise la connexion et alloue un espace mémoire dans lequel il gardera une copie des informations qui vont circuler.

Une fois que la connexion est établie entre le terminal mobile client TA et le serveur de présence virtuelle 100, ce dernier se connecte à au moins un des serveurs de messagerie S1 et/ou S2 de manière à ce que les informations à destination ou émises par ledit terminal mobile client transitent par ledit serveur de présence virtuelle durant la session.
En fonction de la communauté d'appartenance des utilisateurs B1, C1, D1, B2, E2, F2 avec lesquels l'utilisateur A est susceptible de converser, le serveur de présence virtuelle 100 se connectera au serveur de messagerie instantanée S1 lié à une première communauté Co1, ou au serveur de messagerie instantanée S2 lié à une autre communauté Co2. Si l'utilisateur A souhaite converser avec des utilisateurs présents sur plusieurs communautés, le serveur de présence virtuelle se connectera simultanément aux différents serveurs de messagerie S1, S2. Le serveur de présence virtuelle 100 sert donc de passerelle entre le terminal mobile client TA et les serveurs de messagerie instantanée concernée S1 et/ou S2, en laissant transiter les messages et requêtes, et en appliquant si besoin certaines règles d'action.

Pour établir la connexion, le serveur de présence 100 envois une requête de présence aux serveurs de messagerie concernés S1 et/ou S2. Cette requête de présence est similaire à celle émise par l'application informatique du terminal mobile client TA et contient des informations permettant d'identifier l'utilisateur A. Le fait d'émettre une requête de présence similaire à celle émise par le terminal mobile TA permet de ne pas modifier les protocoles d'identification intégrés dans les serveurs de messagerie S1, S2 existants. Dans une variante de réalisation, au lieu d'émettre de nouvelles requêtes de présence, le serveur de présence virtuelle 100 laisse transiter vers les serveurs de messagerie S1 et/ou S2 les requêtes de présence émises périodiquement par l'application informatique placée dans le terminal mobile client TA.

Après analyse des informations d'identification de l'utilisateur A, les serveurs de messagerie S1 et/ou S2 autorisent l'ouverture de la session de messagerie instantanée. Les serveurs de messagerie S1 et/ou S2 informent alors les autres utilisateurs B1, C1, D1, B2, E2, F2 que l'utilisateur A est connecté et prêt à converser. Également, les serveurs de messagerie S1 et/ou S2 peuvent transmettre au serveur de présence virtuelle 100 l'état de présence des autres utilisateurs B1, C1, D1, B2, E2, F2 en session et prêts à converser avec l'utilisateur A. L'utilisateur A peut alors converser avec les utilisateurs B1, C1, D1, B2, E2, F2 ayant ouvert une session.

Le serveur de présence virtuelle 100 est donc perçu par les serveurs de messagerie S1 et/ou S2 comme étant le terminal mobile de l'utilisateur A. On comprend dès lors le sens de l'expression « *présence virtuelle.* » puisque pour les serveurs de messagerie instantanée S1 et/ou S2, le serveur 100 correspond virtuellement au terminal mobile client TA.

A la réception d'une requête émise en ce sens par le serveur de présence virtuelle 100, les serveurs de messagerie instantanée S1 et/ou S2 transmettent audit serveur de présence virtuelle les listes de contacts de l'utilisateur A. Ces dernières sont alors stockées dans une zone mémoire du serveur de présence virtuelle 100.
L'identité des utilisateurs B1, C1, D1, B2, E2, F2 inscrits sur ces listes de contacts est par exemple communiquée au serveur de présence virtuelle 100 par la transmission de leur nom (par exemple « B1 », « C1 », « D1 », « B2 », « E2 », « F2 ») et/ou de leur adresse e-mail (par exemple « B1@Co1.com », « C1@Co1.com », « D1@Co1.com », « B2@Co2.com », « E2@Co2.com », « F2@Co2.com »), etc.
En comparaison du système de messagerie instantanée de l'art antérieur représenté sur la figure 1, le serveur de présence virtuelle 100 comporte un moyen pour agréger les différentes listes de contacts reçues pour ne gérer qu'une unique liste 110 sur laquelle sont inscrites les identités des différents utilisateurs B1, C1, D1, B2, E2, F2, sans distinction de la communauté d'appartenance desdits utilisateurs. En pratique, l'agrégation des listes de contacts se fait par l'intermédiaire d'un programme, sous programme ou autre.

Pour gérer de manière efficace la conversation, il est possible que l'utilisateur A ne souhaite converser qu'avec une partie seulement de ses contacts et filtrer les messages provenant des autres utilisateurs. Pour ce faire, le serveur de présence virtuelle 100 comporte une base de données contenant des règles de filtration destinées à être appliquées aux messages émis par les terminaux des utilisateurs B1, C1, D1, B2, E2, F2 inscrits sur les listes de contacts transmises audit serveur. Ces règles de filtration peuvent être appliquées lors du déroulement normal de la session de messagerie instantanée et/ou lors de la gestion automatique de la session par le serveur de présence virtuelle 100.
De manière avantageuse, le terminal mobile client TA comporte une application informatique permettant de transmettre au serveur de présence virtuelle 100 les règles de filtration que l'utilisateur A souhaite voir associées aux différents utilisateurs B1, C1, D1, B2, E2, F2, ledit serveur étant équipé de moyens pour enregistrer ces règles de filtration dans la base de données.
En se rapportant à l'exemple de la figure 2, l'utilisateur A souhaite uniquement recevoir les messages en provenance des utilisateurs B1, B2 et E2 et souhaite filtrer les messages en provenance de C1, D1 et F2. Pour ce faire, l'application informatique placée dans le terminal mobile client TA transmet une requête au serveur de présence virtuelle 100 destinée à indiquer que les messages provenant des utilisateurs B1, B2 et E2 peuvent lui être communiqués (B1=OK ; B2=OK ; E2=OK) et que les messages provenant des utilisateurs C1, D1 et F2 doivent être filtrés (C1=NO ; D1=NO ; F2=NO).
Le terminal mobile client TA peut intégrer une interface spécifique permettant de choisir, pour chacun de ses contacts, une règle de filtration prédéterminée. Il peut s'agir d'une interface graphique sur laquelle est présentée la liste des différents contacts, un menu déroulant étant associé à chacun desdits contacts, ledit menu déroulant présentant les différentes règles de filtration. Il suffit alors à l'utilisateur A de valider une règle de filtration pour chacun de ses contacts. Certaines règles de filtration peuvent être définies par défaut. Par exemple, si l'utilisateur A ne choisit aucune règle de filtration pour un contact, les messages émis par ce dernier sont réputés être autorisés à transiter vers le terminal mobile client TA. Une fois que les règles de filtration sont définies, l'application informatique du terminal mobile client TA transmet au serveur de présence virtuelle 100 ces données.
Les règles de filtration sont préférentiellement des programmes ou commandes de programmes développés par les concepteurs du serveur de présence virtuelle 100 et intégrés dans ledit serveur. Les opérateurs de messagerie instantanée non donc plus à modifier leur serveur de messagerie S1 et/ou S2 pour proposer à l'utilisateur A ce service de filtration.

Le serveur de présence virtuelle 100 est avantageusement équipé de moyens pour analyser les listes de contacts transmises par le terminal mobile client, et vérifier si pour chacun des utilisateurs B1, C1, D1, B2, E2, F2, inscrits sur lesdites listes, une ou plusieurs règles de filtration sont déjà enregistrées dans la base de données. Cette caractéristique permet à l'utilisateur A de ne pas transmettre systématiquement les mêmes règles de filtration au serveur de présence virtuelle 100. Cette analyse peut être réalisée par l'intermédiaire d'une table de correspondance associant aux utilisateurs déjà inscrits sur la liste de contact 110, la dernière règle de filtration à laquelle ils ont été soumis.

Selon une caractéristique avantageuse de l'invention, le serveur de présence virtuelle 100 comporte un moyen pour transmettre un message d'avertissement aux terminaux TC1, TD1, TF2 des utilisateurs C1, D1, F2 dont les messages ont été filtrés. De même, le serveur de présence virtuelle 100 pourra transmettre un message d'avertissement au terminal mobile client TA de l'utilisateur A lorsqu'un message est filtré. Le message d'avertissement peut être du type SMS, MMS, e-mail, ou autre et transite par un réseau de communication connu de l'homme du métier.

En se rapportant à la figure 2, il peut arriver qu'un même utilisateur B appartienne à deux communautés différentes Co1 et Co2. Dans ce cas, il possédera deux identités différentes selon qu'il est connecté sur l'une ou l'autre des communautés, par exemple B@Co1.com et B@Co2.com. Lorsque l'utilisateur B ouvre une session de messagerie instantanée sur la première communauté Co1, il est vu par le serveur de présence virtuelle 100 comme un premier utilisateur B1 ayant comme identité : B@Co1.com. De même, lorsque l'utilisateur B ouvre une session de messagerie instantanée sur une seconde communauté Co2, il est vu par le serveur de présence virtuelle 100 comme un second utilisateur B2 ayant comme identité : B@Co2.com.

Le serveur de présence virtuelle 100 est avantageusement configuré pour reconnaître que les utilisateurs B1 et B2 sont en fait une seule et unique personne. Pour ce faire, l'application informatique placée dans le terminal mobile client TA transmet au serveur de présence virtuelle 100 une information indiquant que les utilisateurs B1 et B2 ayant des identités différentes doivent être traités comme un unique utilisateur B. De cette manière, le serveur de présence virtuelle 100 pourra choisir de se connecter au serveur de messagerie instantanée S1 ou S2 sur lequel le terminal mobile TB1 ou TB2 de l'utilisateur B est connecté. Le serveur de présence virtuelle 100 pourra donc établir cette connexion indépendamment de la communauté d'appartenance de l'utilisateur B, l'essentiel étant que l'utilisateur A puisse converser avec l'utilisateur B.
De même, l'utilisateur A ne pourra définir qu'une seule règle de filtration pour l'utilisateur B, le serveur de présence virtuelle 100 étant configuré pour appliquer cette règle de filtration aux messages à destination ou émis par les terminaux TB1 ou TB2 des utilisateurs B1 ou B2.

Tant que l'utilisateur A du terminal mobile client TA maintient sa session ouverte, le serveur de présence virtuelle 100 laisse transiter les messages vers ledit terminal mobile. Le serveur de présence virtuelle 100 peut également laisser transiter les requêtes de présence émises périodiquement par l'application informatique placée dans le terminal mobile client TA vers les serveurs de messagerie S1 et/ou S2. Egalement, le serveur de présence virtuelles 100 laisse transiter les requêtes de mises à jour ou autres, en provenance des serveurs de messagerie S1 et/ou S2 et à destination du terminal mobile TA.

Conformément à l'invention, dès que l'utilisateur A clos sa session de messagerie instantanée, le serveur de présence virtuelle 100 active des moyens de gestion et gère automatiquement la session de messagerie instantanée à la place dudit utilisateur A. Dans cette configuration, le serveur de présence virtuelle a un rôle essentiellement actif.

Les moyens de gestions sont des processeurs, des contrôleurs ou tous autres softwares/hardwares équivalents permettant de gérer des événements intervenant au niveau du serveur de présence virtuelle 100. En exécutant un ou plusieurs programmes, sous-programmes, microprogrammes ou autres, les moyens de gestions sont aptes à gérer la session de messagerie instantanée à la place de l'utilisateur A. En particulier, les moyens de gestion sont configurés pour recevoir et stockés les messages émis par les autres utilisateurs B1, C1, D1, B2, E2, F2 encore en session et transmettre aux dits utilisateurs d'autres messages en réponse.

Au moment où l'utilisateur A clos sa session de messagerie instantanée, l'application informatique placée dans son terminal mobile client TA transmet une requête en ce sens au serveur de présence virtuelle 100. Dès réception de cette requête, le serveur de présence virtuelle 100 active les moyens de gestion. Cette activation peut également être conditionnée à la réception d'une information indiquant explicitement que l'utilisateur A souhaite que le serveur de présence virtuelle 100 continue de gérer automatiquement sa session. En pratique, cette requête contient un code ou une partie de code aptes, à l'exécution, à activer les moyens de gestion.

De manière complémentaire et/ou en variante de réalisation, le serveur de présence virtuelle 100 est avantageusement configuré pour activer les moyens de gestion lorsque la connexion entre le terminal mobile client TA et ledit serveur de présence virtuelle est coupée. Il est en effet possible que l'utilisateur A ferme sa session sans que l'application informatique placée dans son terminal mobile client TA ait le temps de transmettre la requête de clôture. En pratique, lorsque la connexion entre le terminal mobile client TA et le serveur de présence virtuelle 100 est coupée, une application placée dans ledit serveur active les moyens de gestion.

Une fois activés, les moyens de gestion maintiennent la connexion entre le serveur de présence virtuelle 100 et les serveurs de messagerie instantanée S1 et/ou S2. De cette manière, les serveurs S1 et/ou S2 continuent de recevoir et d'envoyer des requêtes sans détecter l'absence de l'utilisateur A et continuent de gérer la session de messagerie instantanée comme si ledit utilisateur A était toujours connecté.

La réception des messages émis par les utilisateurs B1, C1, D1, B2, E2, F2 encore en session, commande les moyens de gestion de manière à ce qu'il stockent lesdits messages dans une zone mémoire du serveur de présence virtuelle 100. Ainsi, au moment où l'utilisateur A ouvrira de nouveau sa session de messagerie instantanée, il pourra prendre connaissance de tous les messages échangés.

Lors de la gestion automatique de la session, les moyens de gestion peuvent commander l'émission d'un message d'alerte à destination du terminal mobile client TA, lorsqu'un message émis par les terminaux TB1, TC1, TD1, TB2, TE2, TF2 des utilisateurs B1, C1, D1, B2, E2, F2 encore en session et destiné à l'utilisateur A, est reçu par le serveur de présence virtuelle 100. De cette manière, l'utilisateur A peut être averti qu'un de ses contacts cherche à le joindre. Le message d'alerte peut être du type SMS, MMS, e-mail, ou autre et transite par un réseau de communication connu de l'homme du métier.

D'une manière connue de l'homme du métier, les serveurs de messageries S1 et/ou S2 comportent des moyens pour transmettre au serveur de présence virtuelle 100 une requête de présence lorsqu'un nouvel utilisateur inscrit sur les listes de contacts ouvre une session de messagerie instantanée. Dans ce cas, la réception de cette requête de présence active les moyens de gestion du serveur de présence virtuelle 100 de manière à ce que lesdits moyens de gestion émettent un message d'avertissement à destination du terminal mobile client TA. L'utilisateur A peut ainsi être averti qu'un de ses contacts est prêt à communiquer avec lui. Le message d'avertissement peut être du type SMS, MMS, e-mail, ou autre et transite par un réseau de communication connu de l'homme du métier.
De la même façon, lorsque le serveur de présence virtuelle 100 détecte un nouvel évènement (nouveau message, ...) susceptible d'intéresser l'utilisateur A, les moyens de gestion peuvent émettre un message d'avertissement à destination du terminal mobile client TA.

En cas de gestion automatique de la session, il peut également être avantageux d'avertir les autres utilisateurs B1, C1, D1, B2, E2, F2 encore en session, que l'utilisateur A ne peut pas leur répondre dans l'immédiat, mais qu'ils peuvent continuer à converser normalement comme s'il était toujours présent. En effet, les autres utilisateurs B1, C1, D1, B2, E2, F2 pourraient trouver surprenant que l'utilisateur A ne participe pas à la conversation alors qu'il est présumé être encore en session.
Pour ce faire, une fois activés, les moyens de gestion commandent l'émission d'un message d'avertissement à destination des terminaux TB1, TC1, TD1, TB2, TE2, TF2 des autres utilisateurs B1, C1, D1, B2, E2, F2 encore en session. Le message d'avertissement peut être du type SMS, MMS, e-mail, ou autre et transite par les serveurs de messagerie S1 et/ou S2 ou par un autre réseau de communication connu de l'homme du métier.

Le serveur de présence virtuelle 100 conforme à l'invention permet donc d'agréger plusieurs fonctionnalités qu'un serveur de messagerie instantanée S1 et/ou S2 ne pourrait pas supporter, à moins de modifications complexes.

## Revendications

1. Système de messagerie instantanée pour terminaux mobiles, comportant :
- un ou plusieurs serveurs de messagerie instantanée (S1, S2) aptes à délivrer des services de messagerie instantanée à des terminaux mobiles (TA, TB1, TC1, TD1, TB2, TE2, TF2) connectés aux dits serveurs et dont les utilisateurs (A, B1, C1, D1, B2, E2, F2) ont ouvert une session de messagerie instantanée,
- un serveur de présence virtuelle (100) indépendant des serveurs de messagerie instantanée (S1, S2) existants, ledit serveur de présence virtuelle étant connecté à au moins un terminal mobile client (TA) et à au moins un des serveurs de messagerie existants (S1, S2) de manière à ce que les informations à destination ou émises par ledit terminal mobile client transitent par ledit serveur de présence virtuelle,
**se caractérisant par le fait que** ledit serveur de présence virtuelle (100) comporte des moyens pour gérer automatiquement une session de messagerie instantanée à la place dudit utilisateur (A), lesdits moyens de gestion étant activés lorsque la connexion entre ledit terminal mobile client (TA) et ledit serveur de présence virtuelle est coupée.

2. Système de messagerie instantanée pour terminaux mobiles, comportant :
- un ou plusieurs serveurs de messagerie instantanée (S1, S2) aptes à délivrer des services de messagerie instantanée à des terminaux mobiles (TA, TB1, TC1, TD1, TB2, TE2, TF2) connectés aux dits serveurs et dont les utilisateurs (A, B1, C1, D1, B2, E2, F2) ont ouvert une session de messagerie instantanée,
- un serveur de présence virtuelle (100) indépendant des serveurs de messagerie instantanée (S1, S2) existants, ledit serveur de présence virtuelle étant connecté à au moins un terminal mobile client (TA) et à au moins un des serveurs de messagerie existants (S1, S2) de manière à ce que les informations à destination ou émises par ledit terminal mobile client transitent par ledit serveur de présence virtuelle,
**se caractérisant par le fait que** ledit serveur de présence virtuelle (100) comporte des moyens pour gérer automatiquement une session de messagerie instantanée à la place dudit utilisateur (A), ledit terminal mobile client (TA) intégrant une application informatique permettant de transmettre audit serveur de présence virtuelle (100) une requête indiquant que l'utilisateur (A) dudit terminal clos sa session de messagerie instantanée, ladite requête contenant un code ou une partie de code apte, à l'exécution, à activer les moyens de gestion dudit serveur de présence virtuelle.

3. Système selon l'une des revendications précédentes, dans lequel une fois activés, les moyens de gestion sont configurés pour recevoir et stocker les messages émis par les terminaux (TB1, TC1, TD1, TB2, TE2, TF2) des autres utilisateurs (B1, C1, D1, B2, E2, F2) encore en session, et transmettre aux dits terminaux d'autres messages en réponse.

4. Système selon l'une des revendications précédentes, dans lequel une fois activés, les moyens de gestion sont configurés pour maintenir la connexion entre le serveur de présence virtuelle (100) et les serveurs de messagerie instantanée (S1, S2).

5. Système selon l'une des revendications précédentes, dans lequel une fois activés, les moyens de gestion sont configurés pour commander l'émission d'un message d'avertissement à destination des terminaux (TB1, TC1, TD1, TB2, TE2, TF2) des autres utilisateurs (B1, C1, D1, B2, E2, F2) encore en session.

6. Système selon l'une des revendications précédentes, dans lequel lors de la gestion automatique de la session, la réception, par le serveur de présence virtuelle (100), des messages émis par les terminaux (TB1, TC1, TD1, TB2, TE2, TF2) des utilisateurs (B1, C1, D1, B2, E2, F2) encore en session, et destinés à l'utilisateur (A) du terminal mobile client (TA), commande les moyens de gestion de manière à ce qu'ils émettent un message d'alerte à destination dudit terminal mobile client.

7. Système selon l'une des revendications précédentes, dans lequel lors de la gestion automatique de la session, la réception, par le serveur de présence virtuelle (100), des messages émis par les terminaux (TB1, TC1, TD1, TB2, TE2, TF2) des utilisateurs (B1, C1, D1, B2, E2, F2) encore en session, et destinés à l'utilisateur (A) du terminal mobile client (TA), commande les moyens de gestion de manière à ce qu'ils stockent lesdits messages dans une zone mémoire dudit serveur de présence virtuelle.

8. Procédé pour gérer automatiquement une session dans un système de messagerie pour terminaux mobiles, **caractérisé en ce que** :
- des terminaux (TB1, TC1, TD1, TB2, TE2, TF2) se connectent à au moins un serveur de messagerie instantanée (S1, S2) de manière à ce que leurs utilisateurs (B1, C1, D1, B2, E2, F2) puissent ouvrir une session de messagerie instantanée,
- au moins un terminal mobile client (TA) d'un utilisateur (A) se connecte à un serveur de présence virtuelle (100) indépendant des serveurs de messagerie instantanée (S1, S2) existants, ledit serveur de présence virtuelle comportant des moyens pour gérer automatiquement une session de messagerie instantanée à la place de l'utilisateur (A) du terminal mobile client (TA),
- le serveur de présence virtuelle (100) se connecte à au moins un des serveurs de messagerie instantanée (S1, S2) de manière à ce que l'utilisateur (A) du terminal mobile client (TA) puisse ouvrir une session de messagerie instantanée et converser avec les autres utilisateurs (B1, C1, D1, B2, E2, F2), les informations à destination ou émises par ledit terminal mobile client transitant par ledit serveur de présence virtuelle,
- les moyens pour gérer automatiquement la session à la place de l'utilisateur (A) du terminal mobile client (TA) sont activés lorsque la connexion entre le terminal mobile client (TA) et ledit serveur de présence virtuelle est coupée.

9. Procédé pour gérer automatiquement une session dans un système de messagerie instantanée pour terminaux mobiles, **caractérisé en ce que** :
- des terminaux (TB1, TC1, TD1, TB2, TE2, TF2) se connectent à au moins un serveur de messagerie instantanée (S1, S2) de manière à ce que leurs utilisateurs (B1, C1, D1, B2, E2, F2) puissent ouvrir une session de messagerie instantanée,
- au moins un terminal mobile client (TA) d'un utilisateur (A) se connecte à un serveur de présence virtuelle (100) indépendant des serveurs de messagerie instantanée (S1, S2) existants, ledit serveur de présence virtuelle comportant des moyens pour gérer automatiquement une session de messagerie instantanée,
- le serveur de présence virtuelle (100) se connecte à au moins un des serveurs de messagerie instantanée (S1, S2) de manière à ce que l'utilisateur (A) du terminal mobile client (TA) puisse ouvrir une session de messagerie instantanée et converser avec les autres utilisateurs (B1, C1, D1, B2, E2, F2), les informations à destination ou émises par ledit terminal mobile client transitant par ledit serveur de présence virtuelle,
- lorsque l'utilisateur (A) du terminal mobile client (TA) souhaite clore sa session de messagerie instantanée, ledit terminal mobile client émet une requête en ce sens à destination du serveur de présence virtuelle (100),
- à la réception de cette requête, le serveur de présence virtuelle (100) active les moyens pour gérer automatiquement la session à la place de l'utilisateur (A) du terminal mobile client (TA).

10. Procédé selon l'une des revendications 8 ou 9, dans lequel une fois activés, les moyens de gestion reçoivent et stockent les messages émis par terminaux (TB1, TC1, TD1, TB2, TE2, TF2) des autres utilisateurs (B1, C1, D1, B2, E2, F2) encore en session, et transmettent aux dits terminaux d'autres messages en réponse.

11. Procédé selon l'une des revendications 8 à 10, dans lequel une fois activés, les moyens de gestion maintiennent la connexion entre le serveur de présence virtuelle (100) et les serveurs de messagerie instantanée (S1, S2).

12. Procédé selon l'une des revendications 8 à 11, dans lequel une fois activés, les moyens de gestion commandent l'émission d'un message d'avertissement à destination des terminaux (TB1, TC1, TD1, TB2, TE2, TF2) des autres utilisateurs (B1, C1, D1, B2, E2, F2) encore en session.

13. Procédé selon l'une des revendications 8 à 12, dans lequel lors de la gestion automatique de la session, à la réception, par le serveur de présence virtuelle (100), des messages émis par les terminaux (TB1, TC1, TD1, TB2, TE2, TF2) des utilisateurs (B1, C1, D1, B2, E2, F2) encore en session, et destinés à l'utilisateur (A) du terminal mobile client (TA), les moyens de gestion émettent un message d'alerte à destination dudit terminal mobile client.

14. Procédé selon l'une des revendications 8 à 13, dans lequel lors de la gestion automatique de la session, à la réception, par le serveur de présence virtuelle (100), des messages émis par les terminaux (TB1, TC1, TD1, TB2, TE2, TF2) des utilisateurs (B1, C1, D1, B2, E2, F2) encore en session, et destinés à l'utilisateur (A) du terminal mobile client (TA), les moyens de gestion stockent lesdits messages dans une zone mémoire dudit serveur de présence virtuelle.

## Claims

1. Instant-messaging system for mobile terminals, comprising:
- one or more instant-messaging servers (S1, S2) able to deliver instant-messaging services to mobile terminals (TA, TB1, TC1, TD1, TB2, TE2, TF2) connected to said servers and whose users (A, B1, C1, D1, B2, E2, F2) have opened an instant-messaging session,
- a virtual-presence server (100) independent of the existing instant-messaging servers (S1, S2), said virtual-presence server being connected to at least one client mobile terminal (TA) and to at least one of the existing messaging servers (S1, S2) in such a way that the information destined for or sent by said client mobile terminal travels via said virtual-presence server,
being **characterized by** the fact that said virtual-presence server (100) comprises means for automatically managing an instant-messaging session in place of said user (A), said management means being activated when the connection between said client mobile terminal (TA) and said virtual-presence server is cut off.

2. Instant-messaging system for mobile terminals, comprising:
- one or more instant-messaging servers (S1, S2) able to deliver instant-messaging services to mobile terminals (TA, TB1, TC1, TD1, TB2, TE2, TF2) connected to said servers and whose users (A, B1, C1, D1, B2, E2, F2) have opened an instant-messaging session,
- a virtual-presence server (100) independent of the existing instant-messaging servers (S1, S2), said virtual-presence server being connected to at least one client mobile terminal (TA) and to at least one of the existing messaging servers (S1, S2) in such a way that the information destined for or sent by said client mobile terminal travels via said virtual-presence server,
being **characterized by** that said virtual-presence server (100) comprises means for automatically managing an instant-messaging session in place of said user (A), said client mobile terminal (TA) integrating a computerized application allowing to transmit to said virtual-presence server (100) a request indicating that the user (A) of said terminal closes his instant-messaging session, said request containing a code or a code part able, on execution, to activate the means for managing said virtual-presence server.

3. System according to one of the preceding claims, wherein once the management means are activated, they are configured to receive and store the messages sent by the terminals (TB1, TC1, TD1, TB2, TE2, TF2) of the other users (B1, C1, D1, B2, E2, F2) still in session, and to transmit other messages to said terminals in response.

4. System according to one of the preceding claims, wherein once the management means are activated, they are configured to maintain the connection between the virtual-presence server (100) and the instant-messaging servers (S1, S2).

5. System according to one of the preceding claims, wherein once the management means are activated, they are configured to control the sending of a warning message destined for the terminals (TB1, TC1, TD1, TB2, TE2, TF2) of the other users (B1, C1, D1, B2, E2, F2) still in session.

6. System according to one of the preceding claims, wherein during the automatic management of the session, the receipt, by the virtual-presence server (100), of the messages sent by the terminals (TB1, TC1, TD1, TB2, TE2, TF2) of the users (B1, C1, D1, B2, E2, F2) still in session, and destined for the user (A) of the client mobile terminal (TA), controls the management means such that they send an alert message destined for said client mobile terminal.

7. System according to one of the preceding claims, wherein during the automatic management of the session, the receipt, by the virtual-presence server (100), of the messages sent by the terminals (TB1, TC1, TD1, TB2, TE2, TF2) of the users (B1, C1, D1, B2, E2, F2) still in session, and destined for the user (A) of the client mobile terminal (TA), controls the management means such that they store said messages in a memory area of said virtual-presence server.

8. Method for automatically managing a session in a messaging system for mobile terminals, **characterized in that**:
- terminals (TB1, TC1, TD1, TB2, TE2, TF2) connect to at least one instant-messaging server (S1, S2) such that their users (B1, C1, D1, B2, E2, F2) can open an instant-messaging session,
- at least one client mobile terminal (TA) of a user (A) connects to a virtual-presence server (100) independent of the existing instant-messaging servers (S1, S2), said virtual-presence server comprising means for automatically managing an instant-messaging session in place of the user (A) of the client mobile terminal (TA),
- the virtual-presence server (100) connects to at least one of the instant-messaging servers (S1, S2) in such a way that the user (A) of the client mobile terminal (TA) can open an instant-messaging session and converse with the other users (B1, C1, D1, B2, E2, F2), the information destined for or sent by said client mobile terminal travelling via said virtual-presence server,
- the means for automatically managing the session in place of the user (A) of the client mobile terminal (TA) are activated when the connection between the client mobile terminal (TA) and said virtual-presence server is cut off.

9. Method for automatically managing a session in an instant-messaging system for mobile terminals, **characterized in that**:
- terminals (TB1, TC1, TD1, TB2, TE2, TF2) connect to at least one instant-messaging server (S1, S2) such that their users (B1, C1, D1, B2, E2, F2) can open an instant-messaging session,
- at least one client mobile terminal (TA) of a user (A) connects to a virtual-presence server (100) independent of the existing instant-messaging servers (S1, S2), said virtual-presence server comprising means for automatically managing an instant-messaging session,
- the virtual-presence server (100) connects to at least one of the instant-messaging servers (S1, S2) such that the user (A) of the client mobile terminal (TA) can open an instant-messaging session and converse with the other users (B1, C1, D1, B2, E2, F2), the information destined for or sent by said client mobile terminal travelling via said virtual-presence server,
- when the user (A) of the client mobile terminal (TA) wishes to close his instant-messaging session, said client mobile terminal sends a request to that effect destined for the virtual-presence server (100),
- on receipt of this request, the virtual-presence server (100) activates the means for automatically managing the session in place of the user (A) of the client mobile terminal (TA).

10. Method according to one of Claims 8 or 9, wherein once the management means are activated, they receive and store the messages sent by terminals (TB1, TC1, TD1, TB2, TE2, TF2) of the other users (B1, C1, D1, B2, E2, F2) still in session, and transmit other messages to said terminals in response.

11. Method according to one of Claims 8 to 10, wherein once the management means are activated, they maintain the connection between the virtual-presence server (100) and the instant-messaging servers (S1, S2).

12. Method according to one of Claims 8 to 11, wherein once the management means are activated they control the sending of a warning message destined for the terminals (TB1, TC1, TD1, TB2, TE2, TF2) of the other users (B1, C1, D1, B2, E2, F2) still in session.

13. Method according to one of Claims 8 to 12, wherein during the automatic management of the session, on receipt, by the virtual-presence server (100), of the messages sent by the terminals (TB1, TC1, TD1, TB2, TE2, TF2) of the users (B1, C1, D1, B2, E2, F2) still in session, and destined for the user (A) of the client mobile terminal (TA), the management means send an alert message destined for said client mobile terminal.

14. Method according to one of Claims 8 to 13, wherein during the automatic management of the session, on receipt, by the virtual-presence server (100), of the messages sent by the terminals (TB1, TC1, TD1, TB2, TE2, TF2) of the users (B1, C1, D1, B2, E2, F2) still in session, and destined for the user (A) of the client mobile terminal (TA), the management means store said messages in a memory area of said virtual-presence server.

## Patentansprüche

1. Instant-Messaging-System für mobile Endgeräte, das aufweist:
- einen oder mehrere Instant-Messaging-Server (S1, S2) die Instant-Messaging-Dienste an mobile Endgeräte (TA, TB1, TC1, TD1, TB2, TE2, TF2) liefern können, die mit den Servern verbunden sind und deren Benutzer (A, B1, C1, D1, B2, E2, F2) eine Instant-Messaging-Sitzung eröffnet haben,
- einen Server virtueller Präsenz (100) unabhängig von den vorhandenen Instant-Messaging-Servern (S1, S2), wobei der Server virtueller Präsenz mit mindestens einem mobilen Client-Endgerät (TA) und mit mindestens einem der vorhandenen Messaging-Server (S1, S2) verbunden ist, damit die für das mobile Client-Endgerät bestimmten oder von ihm gesendeten Informationen über den Server virtueller Präsenz gehen,
**dadurch gekennzeichnet, dass** der Server virtueller Präsenz (100) Einrichtungen aufweist, um automatisch eine Instant-Messaging-Sitzung anstelle des Benutzers (A) zu verwalten, wobei die Verwaltungseinrichtungen aktiviert werden, wenn die Verbindung zwischen dem mobilen Client-Endgerät (TA) und dem Server virtueller Präsenz getrennt wird.

2. Instant-Messaging-System für mobile Endgeräte, das aufweist:
- einen oder mehrere Instant-Messaging-Server (S1, S2), die Instant-Messaging-Dienste an mobile Endgeräte (TA, TB1, TC1, TD1, TB2, TE2, TF2) liefern können, die mit den Servern verbunden sind und deren Benutzer (A, B1, C1, D1, B2, E2, F2) eine Instant-Messaging-Sitzung eröffnet haben,
- einen Server virtueller Präsenz (100) unabhängig von den vorhandenen Instant-Messaging-Servern (S1, S2), wobei der Server virtueller Präsenz mit mindestens einem mobilen Client-Endgerät (TA) und mit mindestens einem der vorhandenen Messaging-Server (S1, S2) verbunden ist, damit die für das mobile Client-Endgerät bestimmten oder von ihm gesendeten Informationen über den Server virtueller Präsenz gehen,
**dadurch gekennzeichnet, dass** der Server virtueller Präsenz (100) Einrichtungen aufweist, um automatisch eine Instant-Messaging-Sitzung anstelle des Benutzers (A) zu verwalten, wobei das mobile Client-Endgerät (TA) eine Informatik-Anwendung enthält, die es ermöglicht, an den Server virtueller Präsenz (100) eine Anforderung zu übertragen, die anzeigt, dass der Benutzer (A) des Endgeräts seiner Instant-Messaging-Sitzung beendet, wobei die Anforderung einen Code oder einen Codeteil enthält, der bei der Ausführung in der Lage ist, die Verwaltungseinrichtungen des Servers virtueller Präsenz zu aktivieren.

3. System nach einem der vorhergehenden Ansprüche, bei dem die Verwaltungseinrichtungen, wenn sie aktiviert sind, konfiguriert sind, um die von den Endgeräten (TB1, TC1, TD1, TB2, TE2, TF2) der anderen noch in der Sitzung befindlichen Benutzer (B1, C1, D1, B2, E2, F2) gesendeten Mitteilungen zu empfangen und zu speichern, und an die Endgeräte andere Mitteilungen als Antwort zu übertragen.

4. System nach einem der vorhergehenden Ansprüche, bei dem die Verwaltungseinrichtungen, wenn sie aktiviert sind, konfiguriert sind, um die Verbindung zwischen dem Server virtueller Präsenz (100) und den Instant-Messaging-Servern (S1, S2) aufrecht zu erhalten.

5. System nach einem der vorhergehenden Ansprüche, bei dem die Verwaltungseinrichtungen, wenn sie aktiviert sind, konfiguriert sind, um das Senden einer Benachrichtigungsmitteilung an die Endgeräte (TB1, TC1, TD1, TB2, TE2, TF2) der anderen noch in der Sitzung befindlichen Benutzer (B1, C1, D1, B2, E2, F2) zu steuern.

6. System nach einem der vorhergehenden Ansprüche, bei dem während der automatischen Verwaltung der Sitzung der Empfang, durch den Server virtueller Präsenz (100), der Mitteilungen, die von den Endgeräten (TB1, TC1, TD1, TB2, TE2, TF2) der noch in der Sitzung befindlichen Benutzer (B1, C1, D1, B2, E2, F2) gesendet werden und für den Benutzer (A) des mobilen Client-Endgeräts (TA) bestimmt sind, die Verwaltungseinrichtungen so steuert, dass sie eine Alarmmitteilung an das mobile Client-Endgerät senden.

7. System nach einem der vorhergehenden Ansprüche, bei dem während der automatischen Verwaltung der Sitzung der Empfang, durch den Server virtueller Präsenz (100), der Mitteilungen, die von den Endgeräten (TB1, TC1, TD1, TB2, TE2, TF2) der noch in der Sitzung befindlichen Benutzer (B1, C1, D1, B2, E2, F2) gesendet werden und für den Benutzer (A) des mobilen Client-Endgeräts (TA) bestimmt sind, die Verwaltungseinrichtungen so steuert, dass sie die Mitteilungen in einer Speicherzone des Servers virtueller Präsenz speichern.

8. Verfahren zur automatischen Verwaltung einer Sitzung in einem Messaging-System für mobile Endgeräte, **dadurch gekennzeichnet, dass**:
- Endgeräte (TB1, TC1, TD1, TB2, TE2, TF2) mit mindestens einem Instant-Messaging-Server (S1, S2) verbunden werden, damit ihre Benutzer (B1, C1, D1, B2, E2, F2) eine Instant-Messaging-Sitzung eröffnen können,
- mindestens ein mobiles Client-Endgerät (TA) eines Benutzers (A) mit einem Server virtueller Präsenz (100) verbunden wird, der von den vorhandenen Instant-Messaging-Servern (S1, S2) unabhängig ist, wobei der Server virtueller Präsenz Einrichtungen aufweist, um automatisch eine Instant-Messaging-Sitzung anstelle des Benutzers (A) des mobilen Client-Endgeräts (TA) zu verwalten,
- der Server virtueller Präsenz (100) mit mindestens einem der Instant-Messaging-Server (S1, S2) verbunden wird, damit der Benutzer (A) des mobilen Client-Endgeräts (TA) eine Instant-Messaging-Sitzung eröffnen und sich mit den anderen Benutzern (B1, C1, D1, B2, E2, F2) unterhalten kann, wobei die für das mobile Client-Endgerät bestimmten oder vom ihm gesendeten Informationen über den Server virtueller Präsenz gehen,
- die Einrichtungen zur automatischen Verwaltung der Sitzung anstelle des Benutzers (A) des mobilen Client-Endgeräts (TA) aktiviert werden, wenn die Verbindung zwischen dem mobilen Client-Endgerät (TA) und dem Server virtueller Präsenz getrennt wird.

9. Verfahren zur automatischen Verwaltung einer Sitzung in einem Instant-Messaging-System für mobile Endgeräte, **dadurch gekennzeichnet, dass**:
- Endgeräte (TB1, TC1, TD1, TB2, TE2, TF2) mit mindestens einem Instant-Messaging-Server (S1, S2) verbunden werden, damit ihre Benutzer (B1, C1, D1, B2, E2, F2) eine Instant-Messaging-Sitzung eröffnen können,
- mindestens ein mobiles Client-Endgerät (TA) eines Benutzers (A) mit einem Server virtueller Präsenz (100) verbunden wird, der von den vorhandenen Instant-Messaging-Servern (S1, S2) unabhängig ist, wobei der Server virtueller Präsenz Einrichtungen aufweist, um automatisch eine Instant-Messaging-Sitzung zu verwalten,
- der Server virtueller Präsenz (100) mit mindestens einem der Instant-Messaging-Server (S1, S2) verbunden wird, damit der Benutzer (A) des mobilen Client-Endgeräts (TA) eine Instant-Messaging-Sitzung eröffnen und sich mit den anderen Benutzern (B1, C1, D1, B2, E2, F2) unterhalten kann, wobei die für das mobile Client-Endgerät bestimmten oder vom ihm gesendeten Informationen über den Server virtueller Präsenz gehen,
- wenn der Benutzer (A) des mobilen Client-Endgeräts (TA) seine Instant-Messaging-Sitzung beenden möchte, das mobile Client-Endgerät eine diesbezügliche Anforderung an den Server virtueller Präsenz (100) sendet,
- bei Empfang dieser Anforderung der Server virtueller Präsenz (100) die Einrichtungen zur automatischen Verwaltung der Sitzung anstelle des Benutzers (A) des mobilen Client-Endgeräts (TA) aktiviert.

10. Verfahren nach einem der Ansprüche 8 oder 9, bei dem die Verwaltungseinrichtungen, wenn sie aktiviert sind, die von Endgeräten (TB1, TC1, TD1, TB2, TE2, TF2) der anderen noch in der Sitzung befindlichen Benutzer (B1, C1, D1, B2, E2, F2) gesendeten Mitteilungen empfangen und speichern und andere Mitteilungen als Antwort an die Endgeräte übertragen.

11. Verfahren nach einem der Ansprüche 8 bis 10, bei dem die Verwaltungseinrichtungen, wenn sie aktiviert sind, die Verbindung zwischen dem Server virtueller Präsenz (100) und den Instant-Messaging-Servern (S1, S2) aufrecht erhalten.

12. Verfahren nach einem der Ansprüche 8 bis 11, bei dem die Verwaltungseinrichtungen, wenn sie aktiviert sind, das Senden einer Benachrichtigungsmitteilung an die Endgeräte (TB1, TC1, TD1, TB2, TE2, TF2) der anderen noch in der Sitzung befindlichen Benutzer (B1, C1, D1, B2, E2, F2) steuern.

13. Verfahren nach einem der Ansprüche 8 bis 12, bei dem während der automatischen Verwaltung der Sitzung beim Empfang durch den Server virtueller Präsenz (100) der Mitteilungen, die von den Endgeräten (TB1, TC1, TD1, TB2, TE2, TF2) der noch in der Sitzung befindlichen Benutzer (B1, C1, D1, B2, E2, F2) gesendet und für den Benutzer (A) des mobile Client-Endgeräts (TA) bestimmt sind, die Verwaltungseinrichtungen eine Alarmmitteilung an das mobile Client-Endgerät senden.

14. Verfahren nach einem der Ansprüche 8 bis 13, bei dem während der automatischen Verwaltung der Sitzung beim Empfang durch den Server virtueller Präsenz (100) der Mitteilungen, die von den Endgeräten (TB1, TC1, TD1, TB2, TE2, TF2) der noch in der Sitzung befindlichen Benutzer (B1, C1, D1, B2, E2, F2) gesendet und für den Benutzer (A) des mobile Client-Endgeräts (TA) bestimmt sind, die Verwaltungseinrichtungen die Mitteilungen in einer Speicherzone des Servers virtueller Präsenz speichern.
